# EUROPEAN PATENT APPLICATION

(11) **EP 4 656 439 A1**
(43) Date of publication of application: **03.12.2025**
(21) Application number: 24778781.5
(22) Date of filing: 15.02.2024
(51) Int. Cl.: B60L 3/00, B60K 35/00, B60L 7/22, B60L 58/12

(54) **WORK VEHICLE**

(30) Priority: 28.03.2023 JP 2023051726
(71) Applicant: Hitachi Construction Machinery Co., Ltd., Tokyo 110-0015 (JP)
(72) Inventor: LI, Zhi, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); NAKATE, Youhei, Tsuchiura-shi, Ibaraki 300-0013 (JP); KIMURA, Takuya, Tsuchiura-shi, Ibaraki 300-0013 (JP); SAIJOU, Kimihiro, Tsuchiura-shi, Ibaraki 300-0013 (JP); ABE, Yuusuke, Tsuchiura-shi, Ibaraki 300-0013 (JP); KANAYA, Yousuke, Tsuchiura-shi, Ibaraki 300-0013 (JP); SUZUKI, Shoutarou, Tsuchiura-shi, Ibaraki 300-0013 (JP)
(74) Representative: Manitz Finsterwald Patent- und Rechtsanwaltspartnerschaft mbB
(86) International application number: PCT/JP2024/005123
(87) International publication number: WO 2024/202636

(57) **Abstract**

In a dump truck, a controller generates a display image 100 including a charging power display portion 130 that displays magnitude of charging power to be charged in a battery and a power consumption display portion 140 that displays magnitude of power consumption to be consumed by a power consumption device, of regenerative power, and causes a display device to display the display image 100. With the configuration, a driver can recognize a degree of charging power or power consumption per unit time according to a current depression amount of a brake pedal, and the driver is urged to perform an appropriate braking operation to efficiently recover the regenerative power.

## Description

### Technical Field

The present invention relates to a work vehicle that includes an electric motor for traveling and causes a display device to display magnitude of regenerative power generated by the electric motor.

### Background Art

Conventionally, in a vehicle including an electric motor for traveling, there is known a technique of displaying magnitude of regenerative power generated by the electric motor on a display device. For example, Patent Document 1 describes an electric vehicle including a motor for traveling to which power is supplied from a battery, and a display unit that simultaneously displays target regenerative braking force and actual regenerative braking force generated by the motor for traveling. In this electric vehicle, both the target regenerative braking force and the actual regenerative braking force are displayed on the display unit to cause a driver to recognize a state of control of the regenerative braking force, so that the driver does not feel uncomfortable even if the control is performed to adjust the target regenerative braking force according to a road surface condition.

### Prior Art Document

### Patent Document

Patent Document 1: Japanese Patent No. 6856885

### Summary of the Invention

### Problems to be solved by the Invention

Incidentally, in a large work vehicle including an electric motor for traveling such as a large-scale electrically-driven dump truck for mining, surplus electric power that cannot be charged in a battery, of regenerative power generated by the electric motor, is consumed by a power consumption device (resistor). That is, in such a work vehicle, in a case where a braking operation of the driver is steep, it is necessary to assume that the regenerative power exceeding charging power that can be charged per unit time in the battery is generated, and the regenerative power cannot be efficiently recovered.

The present invention has been made in view of such a problem, and an object of the present invention is to provide a work vehicle capable of prompting a driver to perform an appropriate braking operation and efficiently recovering regenerative power generated by an electric motor for traveling.

### Means for Solving the Problems

To achieve the above-described object, a work vehicle of the present invention comprising: a battery; an electric motor for traveling connected to the battery; a power consumption device capable of consuming regenerative power generated by the electric motor; a display device that displays various types of information; and a controller that controls the electric motor, the power consumption device, and the display device, wherein the controller generates a display image including a charging power display portion that displays magnitude of charging power to be charged in the battery and a power consumption display portion that displays magnitude of power consumption to be consumed by the power consumption device, of the regenerative power, and causes the display device to display the display image.

### Advantageous Effects of the Invention

According to the work vehicle of the present invention, it is possible to prompt a driver to perform an appropriate braking operation and to efficiently recover regenerative power generated by an electric motor for traveling.

### Brief Description of the Drawings

FIG. 1 is a side view schematically illustrating a dump truck as a work vehicle according to an embodiment.
FIG. 2 is a schematic configuration diagram illustrating an example of a system configuration of the dump truck.
FIG. 3 is an explanatory diagram illustrating an example of a display image displayed on a display device.
FIG. 4 is an explanatory diagram illustrating a charging power display portion and a power consumption display portion in a case where charging power per unit time increases.
FIG. 5 is an explanatory diagram illustrating a charging power display portion and a power consumption display portion in a case where power consumption per unit time increases.
FIG. 6 is an explanatory diagram illustrating a charging power display portion and a power consumption display portion in a case where an upper limit value of charging power of a battery decreases from a specified value.

### Mode for Carrying out the Invention

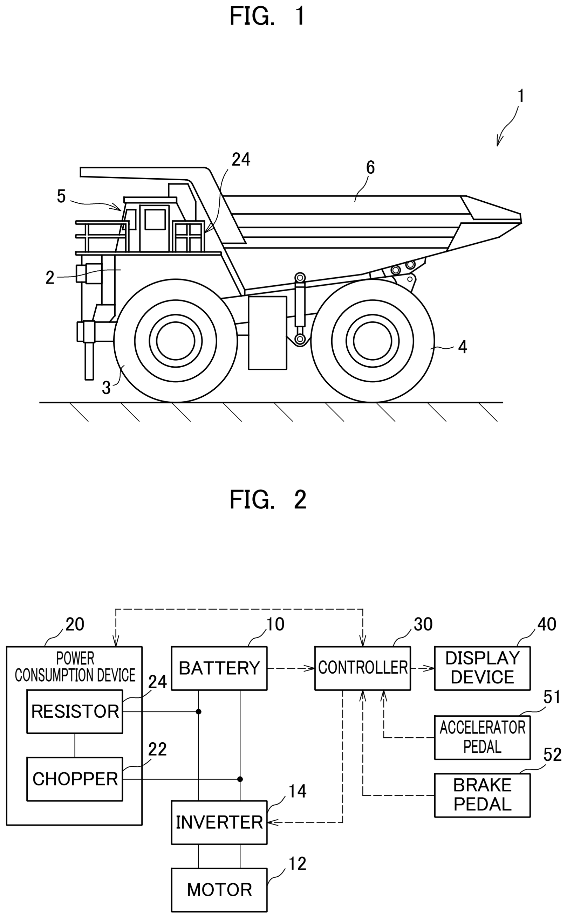

Hereinafter, an embodiment of the present invention will be described with reference to the drawings. Fig. 1 is a side view schematically illustrating a dump truck as a work vehicle according to the embodiment. Further, Fig. 2 is a schematic configuration diagram illustrating an example of a system configuration of the dump truck. A dump truck 1 illustrated in Fig. 1 is used as a work vehicle that loads and transports a load such as earth and sand in a work site such as a large-scale mine, and travels by transmitting power of a motor 12 (electric motor) driven by power from a battery 10 to rear wheels 4. That is, the dump truck 1 is an electric dump truck that travels and performs work using the power from the battery 10 as a power source.

As illustrated in Fig. 1, the dump truck 1 includes a vehicle body 2, a pair of right and left front wheels 3 and a pair of right and left rear wheels 4 (drive wheels) provided on the vehicle body 2, a cab 5 provided in an upper front portion of the vehicle body 2, and a cargo bed 6 rotatably attached in an up-down direction to an upper rear portion of the vehicle body 2. In addition, as illustrated in Fig. 2, the dump truck 1 includes the battery 10, the motor 12 for traveling, an inverter 14, a power consumption device 20, a controller 30, and a display device 40.

The battery 10 is a secondary battery such as a lithium ion battery, and includes a battery module (not illustrated) configured by integrating a plurality of battery cells. A predetermined upper limit value of charging power that can be charged per unit time is set for the battery 10. A specified value of the upper limit value is determined in advance according to specifications of the battery 10, and is stored in a storage unit (not illustrated) of the controller 30. In addition, the upper limit value may decrease from the specified value according to various conditions such as a state of charge and a temperature of the battery 10, other control reasons, and occurrence of abnormality. A decrease amount of the upper limit value from the specified value is stored in advance in the controller 30 according to the above condition, or is calculated by the controller 30 according to the above condition.

The motor 12 is electrically connected to the battery 10 via the inverter 14, is driven by being supplied with the power from the battery 10, and rotates the rear wheels 4 via a transaxle and a drive shaft (not illustrated). In addition, the motor 12 is driven by a rotational force of the rear wheels 4 to generate regenerative power during deceleration traveling in an accelerator-off state, such as in a case where a driver steps on a brake pedal 52, and applies a regenerative braking force to the rear wheels 4.

The power consumption device 20 includes a chopper 22 and a resistor 24 (grid box). The chopper 22 is connected between the battery 10 and the inverter 14. The resistor 24 has a grid resistor (not illustrated) electrically connected between the battery 10 and the inverter 14 via the chopper 22. For example, the power consumption device 20 converts surplus power exceeding the upper limit value of the battery 10, of regenerative power generated by the motor 12 during regenerative braking, into thermal energy by the resistor 24 and consumes the thermal energy.

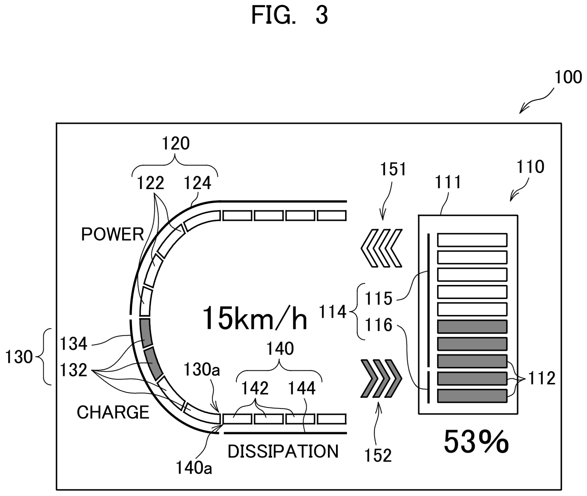

The controller 30 is a controller that performs comprehensive control of the dump truck 1, and includes an input/output device, a storage device (ROM, RAM, nonvolatile RAM, and the like), a central processing unit (CPU), and the like. The controller 30 inputs values detected by various sensors such as depression amounts of an accelerator pedal 51 and the brake pedal 52 by the driver, and calculates information necessary for controlling the dump truck 1. The controller 30 outputs control signals to various devices such as the inverter 14 and the chopper 22 on the basis of the calculated information to drive and control the motor 12 and the power consumption device 20. In addition, the controller 30 generates a display image 100 (see Fig. 3) to be displayed on the display device 40. The display device 40 is a device having a display or the like that displays various types of information, and is disposed at a position where the driver can visually recognize the display image 100 in the cab 5, for example.

The dump truck 1 configured as described above causes the motor 12 to perform the regenerative power generation and applies the regenerative braking force to the rear wheels 4 during deceleration traveling of the dump truck 1, as described above.

The controller 30 calculates a regenerative braking torque output from the motor 12 on the basis of the braking force required during deceleration traveling of the dump truck 1, and controls the inverter 14 so that the calculated regenerative braking torque is output from the motor 12. In addition, the controller 30 controls the chopper 22 to charge the battery 10 with the regenerative power within the range of the upper limit value described above, and to cause the power consumption device 20 (resistor 24) to consume the surplus power in a case where the surplus power is generated. Note that even in a case where the surplus power is not generated, the controller 30 may cause the power consumption device 20 (resistor 24) to consume a part of the regenerative power according to the state of the battery 10.

Here, the electrically driven dump truck 1 used for work in a large-scale mine generally carries a load heavier than its own weight, and energy consumption is larger than that of a general passenger car. However, since a space for mounting the battery 10 as the power source on the dump truck 1 is limited, it is difficult to mount the battery 10 having a large capacity. Therefore, to obtain an efficient energy balance during traveling, it is preferable to charge the battery 10 with the regenerative power as much as possible, which is generated by the motor 12 during regenerative braking. However, in a case where the braking operation by the driver is steep, large regenerative power is generated in a short time by the motor 12, and the surplus power consumed by the power consumption device 20 tends to increase. As a result, there is a possibility that efficient recovery of the regenerative power cannot be realized.

Therefore, to prompt the driver to perform an appropriate braking operation, the controller 30 generates the display image 100 to be described below and displays the display image 100 on the display device 40. Fig. 3 is an explanatory diagram illustrating an example of the display image 100 displayed on the display device 40. The display image 100 includes a state of charge display portion 110, a discharging power display portion 120, a charging power display portion 130, and a power consumption display portion 140.

In generating the display image 100 illustrated in Fig. 3, the controller 30 acquires values of a voltage and charging/discharging currents of the battery 10 detected by sensors (not illustrated), and calculates the current state of charge of the battery 10 and charging/discharging power per unit time on the basis of the acquired values. Further, the controller 30 acquires values of a voltage and a current in the resistor 24 detected by a sensor (not illustrated), and calculates and acquires power consumption per unit time in the power consumption device 20 on the basis of the acquired values. Note that the controller 30 may acquire the charging power and the power consumption on the basis of a control value that in the case of controlling the chopper 22 to charge the battery 10 with the regenerative power within the range of the upper limit value and to consume the surplus power by the power consumption device 20.

Details of the display image 100 will be described with reference to Fig. 3. The state of charge display portion 110 is a display portion that displays the current state of charge of the battery 10. The state of charge display portion 110 includes a frame portion 111 schematically showing the battery 10, and a plurality of segments 112 and ECO charging marks 114 provided inside the frame portion 111. The plurality of segments 112 is graduations indicating the current state of charge of the battery 10, and is arranged side by side along the up-down direction in the screen. As the current state of charge of the battery 10 increases, the controller 30 sets the segments 112 from a turn-off state (portions illustrated in white in the drawing) to a turn-on state (portions illustrated in gray in the drawing) from a lower side to an upper side in the screen. Note that the current state of charge may be displayed by changing a color of the segment 112. Note that the controller 30 displays the current state of charge in a lower portion of the frame portion 111 as "53%" in the drawing.

The ECO charging marks 114 are reference lines including two straight lines extending along an arrangement direction of the plurality of segments 112 in proximity to the plurality of segments 112. The ECO charging marks 114 include, as the two straight lines, a first mark 115 and a second mark 116 shorter than the first mark 115 below the first mark 115. The first mark 115 and the second mark 116 have different colors (for example, the first mark 115 is in green and the second mark 116 is in red). As a result, the driver can recognize that there is a sufficient margin in the state of charge of the battery 10 in a case where a lighted portion of the plurality of segments 112 is within a range of the first mark 115, and that there is little margin in the state of charge of the battery 10 in a case where the lighted portion is within a range of the second mark 116.

The discharging power display portion 120, the charging power display portion 130, and the power consumption display portion 140 are disposed on a side of the state of charge display portion 110. The discharging power display portion 120, and the charging power display portion 130 and the power consumption display portion 140 are disposed in a vertically symmetrical manner. In a space between the discharging power display portion 120, and the charging power display portion 130 and the power consumption display portion 140, a current vehicle speed of the dump truck 1 is displayed as "15 km/h". Further, an arrow 151 that is in the turn-on state in a case where the power is being discharged from the battery 10 is provided between the discharging power display portion 120 and the state of charge display portion 110. Further, an arrow 152 that is in the turn-on state in a case where the battery 10 is being charged with power is provided between the charging power display portion 130 and the power consumption display portion 140, and the state of charge display portion 110.

The discharging power display portion 120 is a display portion that indicates magnitude of the charging/discharging power (here, discharging power) per portion time of the battery 10 during power running operation of supplying power from the battery 10 to the motor 12 for traveling. The discharging power display portion 120 includes a plurality of segments 122 as graduations indicating the magnitude of the discharging power. Note that, in the vicinity of the plurality of segments 122, a mark 124 extending along the arrangement direction of the plurality of segments 122 and characters (for example, "POWER" in the drawing) indicating that the power running operation is being performed are displayed. The controller 30 changes each segment 122 from the turn-off state to the turn-on state from the left side to the right side in the screen as the discharging power per unit time is larger. Note that the discharging power per unit time may be displayed by changing the color of the segment 122. Fig. 3 illustrates an example in which all the segments 122 are in the turn-off state (white) as a state of no discharging power.

The charging power display portion 130 is a display portion that indicates magnitude of the charging/discharging power (here, charging power) per unit time of the battery 10 during regenerative braking in which the motor 12 generates the regenerative power. The charging power display portion 130 includes a plurality of segments 132 as graduations indicating the magnitude of the charging power. The plurality of segments 132 is arranged side by side so as to form a substantially arc-shaped portion that draws a convex shape downward. Note that, in the vicinity of the plurality of segments 132, a mark 134 extending along the arrangement direction of the plurality of segments 132 and characters (for example, "CHARGE" in the drawing) indicating that the regenerative power is being charged in the battery 10 are displayed. As the charging power per unit time is larger, the controller 30 changes the segments 132 from the turn-off state (portions illustrated in white in the drawing) to the turn-on state (portions illustrated in gray in the drawing) from the left side to the right side in the screen. Note that the magnitude of the charging power may be displayed by changing the color of the segment 132.

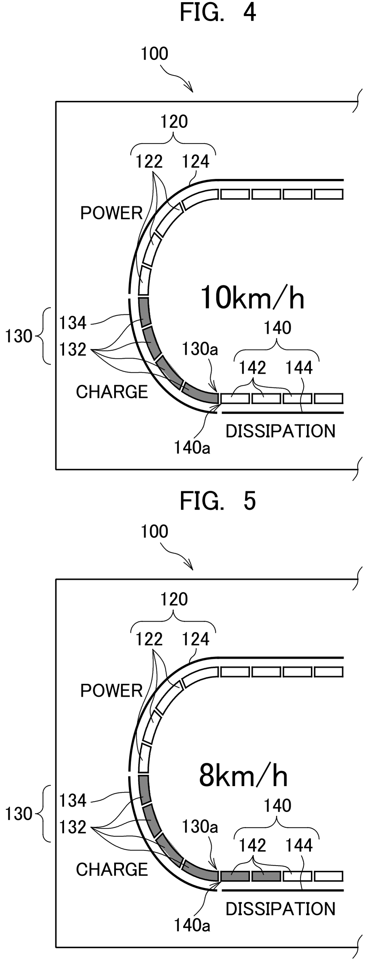

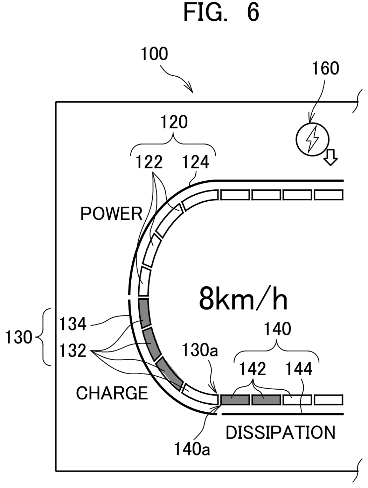

The power consumption display portion 140 is a display portion that indicates magnitude of the power consumption per unit time in the power consumption device 20 during regenerative braking in which the motor 12 generates the regenerative power. The power consumption display portion 140 includes a plurality of segments 142 as graduations for indicating magnitude of the power consumption. In the vicinity of the plurality of segments 142, a mark 144 extending along the arrangement direction of the plurality of segments 142 and characters (such as "DISSIPATION" in the drawing) indicating that the regenerative power is being consumed by the power consumption device 20 are displayed. A start point 140a of the power consumption display portion 140 (one end of the segment 142 indicating that the power consumption is the value 0) and an end point 130a of the charging power display portion 130 (one end of the segment 132 corresponding to the specified value of the upper limit value of the battery 10) are arranged adjacent to each other. As a result, the charging power display portion 130 and the power consumption display portion 140 are arranged in succession. As the power consumption per unit time is larger, the controller 30 changes the segments 142 from the turn-off state (portions illustrated in white in Fig. 3) to the turn-on state (portions illustrated in gray in Figs. 5 and 6) from the left side to the right side in the screen. Note that the magnitude of the power consumption may be displayed by changing the color of the segment 142.

The display image 100 during regenerative braking will be described in detail with reference to the drawings. Fig. 4 is an explanatory diagram illustrating the charging power display portion 130 and the power consumption display portion 140 in a case where the charging power per unit time is increased as compared with the example illustrated in Fig. 3. Fig. 5 is an explanatory diagram illustrating the charging power display portion 130 and the power consumption display portion 140 in a case where the power consumption per unit time increases.

In a case where the driver steps on the brake pedal 52 more steeply, the regenerative power generated by the motor 12 increases and the charging power increases, and the segment 132 more to the right in the charging power display portion 130 is changed to the turn-on state, as illustrated in the change from Fig. 3 to Fig. 4. Then, in a case where the driver steps on the brake pedal 52 still more steeply, the regenerative power exceeds the upper limit value of the battery 10, and the surplus regenerative power is consumed by the power consumption device 20. As a result, the segment 142 included in the power consumption display portion 140 is changed to the turn-on state beyond the end point 130a of the charging power display portion 130, as illustrated in the change from Fig. 4 to Fig. 5. As a result, the driver can recognize the magnitude of the charging power or the power consumption per unit time according to the current depression amount of the brake pedal 52. In the present embodiment, since the end point 130a of the charging power display portion 130 and the start point 140a of the power consumption display portion 140 are adjacently arranged in succession, the relationship between charging and consumption can be grasped as a continuous series of states, and for example, the driver can easily recognize that the surplus regenerative power has started to be consumed as the power consumption.

Further, as described above, the upper limit value of the battery 10 may change from the specified value according to various conditions such as the state of charge and the temperature. Therefore, in a case where the upper limit value of the battery 10 decreases from the specified value, the controller 30 changes (reduces) the display range of the charging power displayed on the charging power display portion 130 according to the decrease amount. Fig. 6 is an explanatory diagram illustrating the charging power display portion 130 and the power consumption display portion 140 in the case where the upper limit value of the charging power of the battery 10 decreases from the specified value. As illustrated in the drawing, in the case where the upper limit value of the charging power of the battery 10 decreases from the specified value, the controller 30 does not turn on the segment 132 (the segment 132 located on the rightmost side in the screen in Fig. 6) corresponding to the decrease. Note that the color of the segment 132 corresponding to the decrease may be displayed in a color different from that of the other segments 132. Then, in a case where there is power consumption, the controller 30 turns on the segment 142 of the power consumption display portion 140 in order from the left side. As a result, the driver can easily recognize that the upper limit value of the battery 10 has decreased from the specified value.

At the same time, the controller 30 displays, on the display image 100, an icon 160 indicating that the upper limit value of the charging power of the battery 10 has decreased from the specified value. The icon 160 may be changed from the turn-off state to the turn-on state or may blink in the case where the upper limit value decreases from the specified value. As a result, the driver can more easily recognize that the upper limit value of the battery 10 has decreased from the specified value.

Further, while charging the battery 10 with the regenerative power, the controller 30 changes a display mode of the display image 100 from a non-charging mode as will be described below. The controller 30 displays the arrow 152 by, for example, blinking the arrow 152 in Fig. 3, changing the color of the line, or switching a line type to a broken line to rotate the line. Note that, in the case of discharging from the battery 10, the controller 30 displays the arrow 151 by a similar method.

Further, the controller 30 changes the display mode of the state of charge display portion 110 in Fig. 3 while charging the battery 10 with the regenerative power. For example, the controller 30 displays the color of the lighted segment 112 of the state of charge display portion 110 in a color different from that during the non-charging mode. At this time, it may be emphasized that the state of charge of the battery 10 is increased by sequentially and continuously changing the color of the lighted segment 112 from the lower side to the upper side. Further, the controller 30 may display the frame portion 111, each of the segments 112, and the ECO charging mark 114 of the state of charge display portion 110 by blinking, changing the color of the line, or switching the line type to a broken line to rotate the line. As described above, while the battery 10 is charged with the regenerative power, the display mode of the arrow 152 and the state of charge display portion 110 is changed from the non-charging mode, so that the driver can easily recognize that the regenerative power can be charged to the battery 10 by the current braking operation.

As described above, in the dump truck 1 according to the embodiment, the controller 30 generates the display image 100 including the charging power display portion 130 that displays the magnitude of the charging power to be charged in the battery 10 and the power consumption display portion 140 that displays the magnitude of the power consumption to be consumed by the power consumption device 20, of the regenerative power, and causes the display device 40 to display the display image 100.

With the configuration, the driver can recognize the magnitude of the charging power or the power consumption per unit time corresponding to the current depression amount of the brake pedal 52, and the driver can appropriately adjust the depression amount of the brake pedal 52 according to a road surface condition on which the dump truck 1 travels. More specifically, it is possible to make the driver be aware of advancing the start of depressing the brake pedal 52 so that large regenerative power is not generated by the driver steeply depresses the brake pedal 52 in a short time. In particular, since the dump truck 1 often travels on a predetermined route in a mine, it is easy to consciously advance the start of stepping on the brake pedal 52 at the time of deceleration, which is effective for efficient recovery of the regenerative power. Further, it is possible to make the driver be aware of suppressing intermittent operation of depressing or releasing the brake pedal 52 in a case where the dump truck 1 travels downhill. That is, it is possible to make the driver be aware of depressing the brake pedal 52 gradually and long to descend so as to gently generate the regenerative power within a chargeable range to the battery 10.

Therefore, according to the dump truck 1 of the embodiment, it is possible to prompt the driver to perform an appropriate braking operation and to efficiently recover the regenerative power generated in the motor 12 for traveling. Further, it is also possible to reduce a load applied to the front wheels 3, the rear wheels 4, and each structure of the dump truck 1 by making the driver be aware of gradually depressing the brake pedal 52.

The description of the embodiment is completed as above, but aspects of the present invention are not limited to this embodiment. For example, in the present embodiment, the present invention is applied to the dump truck 1 as a work vehicle including the battery 10 and the motor 12, but the present invention may be applied to other work vehicles. Further, the work vehicle to which the present invention is applied may further include an internal combustion engine and a generator driven by power of the internal combustion engine, and supply the power generated by the generator to the motor 12. Further, the work vehicle to which the present invention is applied may travel by outputting the power of the internal combustion engine to drive wheels in addition to the power of the motor 12.

Furthermore, the dump truck 1 may be a trolleytype dump truck capable of traveling in a trolley mode of traveling with power supplied from an overhead wire via a pantograph. In that case, the controller 30 may further display the power consumption per unit time supplied to the overhead wire on the display image 100 as long as the power consumption device includes a configuration capable of supplying a part of the regenerative power to the overhead wire and consuming the regenerative power.

Further, the charging power display portion 130 may display the charging power in an arbitrary time zone without being limited to the charging power per unit time, and the power consumption display portion 140 may display the power consumption in the same arbitrary time zone as the charging power display portion 130 without being limited to the power consumption per unit time.

Further, the shape and arrangement position of each segment in each display portion are not limited to those illustrated in Figs. 3 to 6. For example, in Figs. 3 to 6, the segments 112, the segments 122, the segments 132, and the segments 142 are arranged at intervals, but the segments may be connected to each other. In this case, a line indicating division of each segment may be displayed.

Further, the end point 130a of the charging power display portion 130 and the start point 140a of the power consumption display portion 140 may be connected to each other. Furthermore, the arrangement relationship between the charging power display portion 130 and the power consumption display portion 140 may be different from that illustrated in Figs. 3 to 6, for example, arranged in parallel with each other.

Furthermore, Figs. 3 to 6 illustrate an example in which the entire range in one segment is turned on or off (or the color is changed), but only a part of the range in one segment may be turned on or off (or the color may be changed) according to the value to be displayed on each display portion.

### Explanation of Reference Signs

- 1: Dump truck
- 10: Battery
- 12: Motor (electric motor)
- 20: Power consumption device
- 24: Resistor
- 30: Controller
- 40: Display device
- 100: Display image
- 110: State of charge display portion
- 120: Discharging power display portion
- 130: Charging power display portion
- 130a: End point
- 140a: Start point
- 140: Power consumption display portion
- 160: Icon

## Claims

1. A work vehicle comprising:
a battery;
an electric motor for traveling connected to the battery;
a power consumption device capable of consuming regenerative power generated by the electric motor;
a display device that displays various types of information; and
a controller that controls the electric motor, the power consumption device, and the display device, wherein
the controller generates a display image including a charging power display portion that displays magnitude of charging power to be charged in the battery and a power consumption display portion that displays magnitude of power consumption to be consumed by the power consumption device, of the regenerative power, and causes the display device to display the display image.

2. The work vehicle according to claim 1,
wherein the charging power display portion and the power consumption display portion are arranged in succession.

3. The work vehicle according to claim 1,
wherein, in a case where an upper limit value of the power chargeable in the battery decreases from a specified value, the controller changes a display range of the charging power displayed on the charging power display portion according to a decrease amount.

4. The work vehicle according to any one of claims 1 to 3, wherein, in a case where an upper limit value of the power chargeable in the battery decreases from a specified value, the controller causes the display image to display an icon indicating the decrease.

5. The work vehicle according to claim 1,
wherein the controller generates a display image further including a state of charge display portion that displays a current state of charge of the battery, and changes a display mode of the state of charge display portion from a non-charging mode while charging the battery with the regenerative power.
